**Europäisches Patentamt**

**European Patent Office**

**Office européen des brevets**

(19)

(11) Veröffentlichungsnummer: **0 176 842**
**B1**

(12) **EUROPÄISCHE PATENTSCHRIFT**

(45) Veröffentlichungstag der Patentschrift: **05.12.90**

(21) Anmeldenummer: **85111639.2**

(22) Anmeldetag: **14.09.85**

(51) Int. Cl.⁵: **G 06 K 11/16**, G 06 K 11/18

(54) **Cursor für einen elektromagnetischen Digitizer und Verfahren zum Herstellen desselben.**

(30) Priorität: **05.10.84 DE 3436642**

(43) Veröffentlichungstag der Anmeldung:
**09.04.86 Patentblatt 86/15**

(45) Bekanntmachung des Hinweises auf die
Patenterteilung:
**05.12.90 Patentblatt 90/49**

(84) Benannte Vertragsstaaten:
**CH DE FR GB IT LI**

(56) Entgegenhaltungen:
**DE-A-2 939 388**
**GB-A-1 475 746**
**GB-A-2 054 300**

(73) Patentinhaber: **KONTRON ELEKTRONIK GMBH**
**Oskar-von-Miller-Strasse 1**
**D-8057 Eching (DE)**

(72) Erfinder: **Jacob-Grinschgl, Wolfgang**
**Rumfordstrasse 40**
**D-8000 München (DE)**
Erfinder: **Müller, Udo**
**Furtweg 20b**
**D-8044 Unterschleissheim (DE)**

(74) Vertreter: **Dirscherl, Josef et al**
**c/o Bayerische Motoren Werke**
**Aktiengesellschaft, Patentabteilung AJ-3,**
**Postfach 40 02 40, Petuelring 130**
**D-8000 München 40 (DE)**

EP 0 176 842 B1

## Beschreibung

Die Erfindung betrifft einen Cursor nach dem Oberbegriff des Patentanspruchs 1 sowie ein Verfahren zur Herstellung eines solchen Cursors.

Um eine hohe Genauigkeit des Cursors bei einer Positionsbestimmung zu erreichen, ist es nötig, daß die Mittelpunktmarkierung genau mit dem elektrischen Mittelpunkt der Spule übereinstimmt. Falls dies nicht der Fall ist, werden je nach der Winkellage des Cursors auf dem Tablett verschiedene Koordinatenwerte ein- und desselben Ortes angezeigt.

Es ist bereits bekannt, die Spulenwicklung mechanisch von einer ein Fadenkreuz als Mittelpunktmarkierung aufweisenden Trägerplatte getrennt herzustellen und nach Abschluß der Fertigung der beiden Teile die Glaspatte in bezug auf die Spulenwicklung mit Hilfe von Madenschrauben zu justieren. Die dabei erreichte Genauigkeit ist zwar ausreichend, jedoch ist der Herstellungsaufwand sehr groß.

Aus der GB—A—20 54 300 ist ferner ein Cursor für einen elektromagnetischen Digitizer bekannt, bei dem die Mittelpunkmarkierung für die Spule zentrisch zu dieser auf einer runden Glasplatte angeordnet ist. Bei diesem bekannten Cursor hat die Glasplatte einen im Vergleich zum Durchmesser der Spule deutlich größeren Durchmesser. Ferner ist bei diesem bekannten Cursor die Spulenwicklung auf einen separaten Spulenkörper aufgebracht, der auf der Glasplatte zentrisch zur Mittelpunktmarkierung angeordnet ist. Ein Nachteil dieses bekannten Cursors ist, daß einerseits ein separater Spulenkörper erforderlich ist und daß andererseits der Spulenkörper zeinintensiv auf der Glasplatte justiert werden muß. Es ist dadurch auch bei diesem bekannten Cursor ein hoher Herstellungsaufwand erforderlich.

Der Erfindung liegt die Aufgabe zugrunde, einen Cursor der eingangs genannten Art zu schaffen, der eine genaue Mittelpunktmarkierung aufweist und mit wenig Teilen kostengünstig und ohne Abgleich herstellbar ist.

Diese Aufgabe wird durch die Merkmale des Patentanspruchs 1 gelöst.

Es hat sich gezeigt, daß auf diese Weise die gewünschte Genauigkeit erreichbar ist. Außerdem vermeidet diese Konstruktion die Verwendung eines Spulenkörpers.

Vorzugsweise ist die Spulenwicklung durch Einbettung in einen Klebstoff fixiert.

Das Verfahren zum Herstellen des Cursors besteht darin, daß eine runde Glasscheibe mit einem Randschliff versehen wird, daß danach eine Mittelpunktmarkierung auf die Glasscheibe aufgebracht und eine Spulenwicklung direkt auf den Rand des Glases gewickelt wird.

Gemäß einer besonderen Herstellungsvariante wird dabei die Glasscheibe nach dem Schleifen des Randes mit einer Metallschicht versehen und diese Metallschicht anschließend bis auf die Mittelpunktmarkierung weggeätzt, wobei zur Realisierung dieses Herstellungsschrittes vorzugsweise die Metallschicht mit einem Fotolack beschichtet wird und der Fotolack mit einer die Mittelpunktmarkierung abbildenden Vorlage belichtet und anschließend geätzt wird. Hierdurch wird gewährleistet, daß die Mittelpunktmarkierung immer genau zentrisch zu dem rund geschliffenen Rand der Glasscheibe liegt.

Vorzugsweise wird zum Aufbringen der Spulenwicklung das Glas in eine Wickelform eingespannt, die zwei ringförmige seitliche Flansche aufweist, die über die Kanten der Randfläche übergreifen und einen Wickelraum definierter Breite zwischen sich freilassen, wobei die Spulenwicklung auf den freigebliebenen Rand des Glases aufgewickelt, die Wicklung verklebt und das Glas mit der Spulenwicklung sodann aus der Wickelform herausgenommen wird.

Die Erfindung ist im folgenden anhand schematischer Zeichnungen an Ausführungsbeispielen näher beschrieben.

Fig. 1 ist eine perspektivische Ansicht einer runden Glasscheibe mit einem Fadenkreuz;

Fig. 2 ist ein Axialschnitt durch eine Glasscheibe mit einer auf der Randfläche sitzenden Spule;

Fig. 3 ist ein Axialschnitt durch die wesentlichen Teile einer Vorrichtung zum Bewickeln einer Glasscheibe.

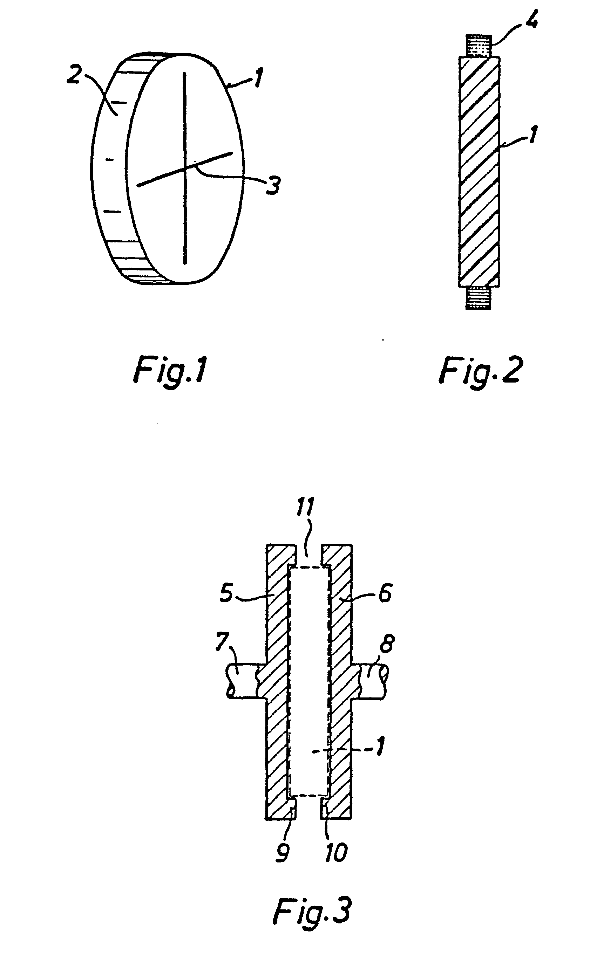

Fig. 1 zeigt eine Glasplatte 1, deren Randfläche 2 rund geschliffen ist und deren eine Stirnfläche mit einem Fadenkreuz 3 versehen ist. Die Herstellung kann in der Weise erfolgen, daß der Rand einer Glasplatte zuerst zylindermantelförmig geschliffen wird und die geschliffene Glasplatte sodann mit einer Metallschicht besputtert oder anderweitig beschichtet wird. Auf die metallisch beschichtete Oberfläche wird sodann ein Fotolack aufgebracht und sodann mittels einer Fotomaske, etwa eines genau über die Randfläche 2 der Glasplatte 1 passenden topfförmigen Deckels, der mit einem kreuzförmigen Ausschnitt versehen ist, die Fotoschicht belichtet und anschließend in bekannter Weise die Metallschicht bis auf den fadenkreuzförmigen belichteten Bereich weggeätzt wird.

Anstelle der Schlitze in einer fadenkreuzförmigen Lochblende kann jedoch auch ein lichtdurchlässiger Deckel mit einem fadenkreuzförmigen lichtundurchlässigen Bereich oder aber eine optische Abbildung einer gewünschten Mittelpunktmarkierung auf die Fotoschicht verwendet werden.

Die derart bearbeitete Glasplatte wird sodann in eine Wickelform eingespannt, die aus zwei Einspanntellern 5 und 6 gebildet ist, die jeweils an den Enden einer Welle 7 bzw. 8 koaxial sitzen.

Die Einspannteller 5 und 6 sind koaxial zueinander angeordnet und derart, daß die Wellen 7 und 8 nach außen vorstehen.

Die einander zugewandten Stirnseiten der Einspannteller 5, 6 sind an ihrem Randbereich mit ringförmigen Schultern 9 bzw. 10 versehen, die aufeinander zuweisen und bei der zwischenbefindlichen Glasplatte 1 einen axialen Abstand freilassen, der einen Wickelraum 11 für die auf die Glasplatte aufzubringende Wicklung bildet.

Die ringförmigen Schultern sind so dimensioniert, daß sie die Glasplatte 1 an der Randfläche 2 praktisch spielfrei übergreifen.

Die Wellen 7 und 8 sind in einer nicht dargestellten Lagerung gehalten.

Zum Aufbringen einer Wicklung auf die Randfläche 2 einer Glasplatte wird diese wie in Fig. 3 gestrichelt dargestellt zwischen die beiden Einspannteller 5 und 6 eingespannt, wobei die Randfläche 2 sowie die einander zugewandten Ringflächen der Schultern 9 und 10 praktisch einen Spulenkörper ersetzen. Diese Vorrichtung kann Teil einer Wickelvorrichtung sein, mit der die Spulenwicklung 4 sodann auf die Randfläche 2 aufgewickelt wird.

Durch Verwendung von Backlackdraht läßt sich durch Erhitzen der Wicklung, etwa durch einen kurzzeitigen genügend hohen Stromfluß, die Wicklung auf der Randfläche 2 fixieren. Die Fixierung kann jedoch auch auf andere bekannte Arten erfolgen.

Ein derart hergestellter Cursor hat eine Abweichung der Mittelpunktmarkierung von dem elektrischen Mittelpunkt der Spulenwicklung, die kleiner als 0,1 mm ist.

**Patentansprüche**

1. Cursor für einen elektromagnetischen Digitizer, mit einer Spule zum Messen der von Strom durchflossenen Leitern eines Tabletts ausgehenden elektromagnetischen Wechselfelder und mit einer Mittelpunktmarkierung (3) für die Spule, wobei die Mittelpunktmarkierung (3) auf einer runden Glasscheibe (1) angebracht ist, deren Rand (2) zentrisch zur Mittelpunktmarkierung (3) geschliffen ist, dadurch gekennzeichnet, daß die Spulenwicklung (4) auf den Rand (2) des Glases (1) direkt aufgewickelt ist.

2. Cursor nach Anspruch 1, dadurch gekennzeichnet, daß die Spulenwicklung (4) durch Einbettung in einen Klebstoff fixiert ist.

3. Verfahren zum Herstellen eines Cursors nach Anspruch 1, dadurch gekennzeichnet, daß eine runde Glasscheibe (1) mit einem Randschliff versehen wird, daß danach eine Mittelpunktmarkierung (3) auf die Glasscheibe (1) aufgebracht und eine Spulenwicklung (4) direkt auf den Rand (2) des Glases (1) gewickelt wird.

4. Verfahren nach Anspruch 3, dadurch gekennzeichnet, daß die Spulenwicklung (4) durch Einbetten in einen Klebstoff fixiert wird.

5. Verfahren nach Anspruch 3 oder 4, dadurch gekennzeichnet, daß die Glasscheibe (1) nach dem Schleifen des Randes (2) mit einer Metallschicht versehen und diese Metallschicht anschließend bis auf die Mittelpunktmarkierung (3) weggeätzt wird.

6. Verfahren nach Anspruch 5, dadurch gekennzeichnet, daß die Metallschicht mit einem Fotolack beschichtet, daß der Fotolack mit einer die Mittelpunktmarkierung (3) abbildenden Vorlage belichtet und anschließend geätzt wird.

7. Verfahren nach einem der Ansprüche 3 bis 6, dadurch gekennzeichnet, daß zum Aufbringen der Spulenwicklung (4) das Glas (1) in eine Wickelform eingespannt wird, die zwei ringförmige seitliche Flansche (5, 6) aufweist, die die Kanten der Randfläche (2) übergreifen und einen Wickelraum (11) definierter Breite zwischen sich freilassen, daß die Spulenwicklung (4) auf den freigebliebenen Rand (2) des Glases (1) aufgewickelt wird, daß die Wicklung (4) verklebt wird und daß das Glas (1) mit der Spulenwicklung (4) aus der Wickelform herausgenommen wird.

**Revendications**

1. Curseur pour un numériseur électromagnétique, avec une bobine pour mesurer les champs alternatifs électromagnétiques sortant des conducteurs d'une pastille, parcourus par un courant, et avec un marquage de point central (3) pour la bobine, le marquage de point central (3) étant appliqué sur un disque de verre (1) rond, dont le bord (2) est rectifié avec pour centre le marquage de point central (3), caractérisé en ce que l'enroulement de bobine (4) est directement enroulé sur le bord (2) du verre (1).

2. Curseur selon la revendication 1, caractérisé en ce que l'enroulement de bobine (4) est fixé par enrobage dans un adhésif.

3. Procédé de fabrication d'un curseur selon la revendication 1, caractérisé en ce qu'un disque de verre rond (1) est pourvu d'un meulage de bordure, qu'un marquage de point central (3) est ensuite appliqué sur le disque de verre (1), et qu'un enroulement de bobine (4) est directement enroulé sur le bord (2) du verre (1).

4. Procédé selon la revendication 3 ou 4, caractérisé en ce que l'enroulement de bobine (4) est fixé par enrobage dans un adhésif.

5. Procédé selon la revendication 3 ou 4, caractérisé en ce qu'après le meulage du bord (2), le disque de verre (1) esat pourvu d'une couche métallique et que cette couche métallique est ensuite éliminée par attaque chimique, jusqu'au marquage de point central (3).

6. Procédé selon la revendication 5, caractérisé en ce que la couche métallique est recouverte d'un vernis photosensible, que le vernis photosensible est illuminé à l'aide d'un dessin-masque reproduisant le marquage de point central (3) et est ensuite éliminé par attaque chimique.

7. Procédé selon l'une des revendications 3 à 6, caractérisé en ce que, pour appliquer l'enroulement de bobine (4), le verre (1) est enserré dans une forme d'enroulement, présentant deux rebords latéraux (5, 6) de forme annulaire, qui entourent les bords de la surface de bordure (2) et laissent libre entre eux un espace d'enroulement (11) de largeur définie, en ce que l'enroulement de bobine (4) est enroulé sur le bord (2) resté libre du verre (1), en ce que l'enroulement (4) est collé et en ce que le verre (1) est extrait de la forme d'enroulement, avec l'enroulement de bobine (4).

**Claims**

1. A cursor for an electromagnetic digitizer, with a coil for the measurement of the electromagnetic alternating fields originating from conductors of a sheet which have current flowing therethrough and with a mid-point marking (3) for the coil, wherein the mid-point marking (3) is applied on a round glass plate (1) the periphery (2) of which is ground centrally to the mid-point marking (3), characterised in that the coil winding (4) is wound directly onto the periphery (2) of the glass (1).

2. A cursor according to claim 1, characterised in that the coil winding (4) is fixed by embedding into an adhesive.

3. A method for the production of a cursor according to claim 1, characterised in that a round glass plate (1) is provided with a peripheral ground surface, that thereafter a mid-point marking (3) is applied onto the glass plate (1) and a coil winding (4) is wound directly onto the periphery (2) of the glass (1).

4. A method according to claim 3, characterised in that the coil winding (4) is fixed by embedding into an adhesive.

5. A method according to claim 3 or 4, characterised in that the glass plate (1), after the grinding of the periphery (2), is provided with a metal layer, and this metal layer is then etched away up to the mid-point marking (3).

6. A method according to claim 5, characterised in that the metal layer is coated with a photo lacquer, that the photo lacquer is exposed with a pattern depicting the mid-point marking (3) and is then etched.

7. A method according to one of claims 3 to 6, characterised in that, for the application of the coil winding (4), the glass (1) is clamped into a winding matrix which has two annular lateral flanges (5, 6) which overlap the edges of the peripheral face (2) and leave free between them a winding space (11) of defined width, that the coil winding (4) is wound onto the periphery (2) of the glass (1) which has remained free, that the winding (4) is stuck and that the glass (1) with the coil winding (4) is taken out of the winding matrix.

Fig.1

Fig.2

Fig.3